# EUROPÄISCHE PATENTSCHRIFT

(11) **EP 3 362 249 B1**
(45) Veröffentlichungstag und Bekanntmachung des Hinweises auf die Patenterteilung: **06.05.2020**
(21) Anmeldenummer: 16794502.1
(22) Anmeldetag: 28.09.2016
(51) Int. Cl.: B29C 48/156, B29C 70/22, B29C 70/52, B29C 48/34, B29C 48/79, B29C 53/60, A47C 23/06

(54) **INLINEVERFAHREN ZUR HERSTELLUNG EINES FEDERLEISTENPROFILS FÜR EINEN LATTENROST**
INLINE METHOD FOR PRODUCING A SPRING STRIP PROFILE FOR A SLATTED FRAME
PROCÉDÉ EN LIGNE POUR LA FABRICATION D'UN PROFILÉ DE LATTE ÉLASTIQUE POUR UN SOMMIER À LATTES

(30) Priorität: 13.10.2015 DE 102015117434
(43) Veröffentlichungstag der Anmeldung: 22.08.2018
(73) Patentinhaber: OKE Group GmbH, 48477 Hörstel (DE)
(72) Erfinder: WESTING, Kerstin, 49124 Georgsmarienhütte (DE); BARTEL, Andreas, 48432 Rheine (DE); PLAGEMANN, Florian, 48477 Hörstel (DE)
(74) Vertreter: Von Rohr Patentanwälte Partnerschaft mbB
(86) Internationale Anmeldenummer: PCT/DE2016/100452
(87) Internationale Veröffentlichungsnummer: WO 2017/063635

(56) Entgegenhaltungen:
- EP-A1- 2 865 296
- EP-A2- 1 063 081
- WO-A1-02/22381
- WO-A1-2007/025288
- CN-A- 102 332 339
- DE-A1- 10 014 376
- DE-A1- 10 251 518
- FR-A1- 2 715 280
- JP-A- H0 976 357
- US-A1- 2005 008 804

## Beschreibung

Die Erfindung betrifft ein Inlineverfahren zur Herstellung eines Federleistenprofils für einen Lattenrost mit den Merkmalen des Oberbegriffs des Anspruchs 1.

Die EP 2 865 296 A1 zeigt verschiedene Profilformen für ein Federleistenprofil, das einen Kernstrang aus einem faserverstärkten Kunststoff, insbesondere einem glasfaserverstärkten Kunststoff, und eine thermoplastische Mantelschicht als Umhüllung umfasst. Der Vorteil eines solchen Federleistenprofils gegenüber den üblicherweise zur Bildung von Lattenrosten eingesetzten Federleisten aus Holz besteht vor allem darin, dass keine Vorkrümmung der Leiste, ein sogenannter Stichbogen, erforderlich ist. Mit dem Verbundprofil sind vielmehr gleiche Tragfähigkeiten und eine gleichbleibende, dauerhafte Elastizität mit einem geraden Profilabschnitt zu erreichen, welcher beliebig ablängbar ist und besser handhabbar und lagerbar ist als gekrümmte Federleisten. Die Herstellung eines solchen Verbundprofils erfolgt üblicherweise derart, dass zunächst der Kernstrang hergestellt wird und auf Rollen zwischengelagert wird, bis er wieder abgewickelt wird und im Wege der Extrusion mit der thermoplastischen Mantelschicht beschichtet wird. Das Zwischenlager ist erforderlich, weil die Durchlaufgeschwindigkeiten bei dem Pultrusionsverfahren, mit dem der Kernstab hergestellt wird, um ein Vielfaches niedriger ist als die Abzugsgeschwindigkeit bei der Extrusion. Das Aufwickeln eines glasfaserverstärkten Kernstabs erfordert erhebliche Kräfte und ist ab einem bestimmten Durchmesser des Querschnitts des Kernstabs gar nicht mehr möglich. Auch birgt der spätere Einsatz der unter Spannung stehenden Wickelrolle in der Extrusionslinie Sicherheitsrisiken, falls nämlich der unter hoher Biegespannung stehende Kernprofilstab brechen sollte. Ein Vollquerschnitt für das Kernprofil ist unbedingt erforderlich, da eine rohrförmige Struktur beim Aufwickeln einknickt und bricht. Insbesondere aber kommt es durch die notwendige Zwischenlagerung des vorgefertigten Kernprofilstabs auf Rollen zu einem erheblichen Zeitverlust, der wirtschaftliche Nachteile bei der Fertigung der Federleiste nach sich zieht.

Aus der FR 2 715 280 ist ein gattungsgemäßes Inlineverfahren zur Ausbildung einer Federleiste aus einem Verbundprofil bekannt, durch das die mit der Zwischenlagerung verbundenen Nachteile vermieden werden. Hierbei wird in einem Arbeitsgang eine Federleiste hergestellt, indem zunächst durch ein an sich ebenfalls bekanntes Pultrusionsverfahren der glasfaserverstärkte Kernstrang ausgebildet wird und dann direkt nachfolgend, in derselben Produktionslinie, die thermoplastische Mantelschicht aufextrudiert wird. Das inline vollständig fertiggestellte Federleistenprofil kann am Ende der Fertigungslinie auf die benötigten Längen abgelängt und verpackt werden. Der Nachteil dieses bekannten Inlineverfahrens zur Herstellung eines Federleistenprofils besteht darin, dass die Durchlaufgeschwindigkeit durch den Pultrusionsprozess eben sehr niedrig ist, d. h. die in der nachgeschalteten Extrusion theoretisch möglichen Durchlaufgeschwindigkeiten können bei weitem nicht ausgeschöpft werden, weil eine bestimmte Verweilzeit des mit einem Reaktionsharz getränkten Glasfaserbündels in dem Pultrusionswerkzeug erforderlich ist, um eine ausreichende Aushärtung zu bewirken. Ist die Aushärtung nicht weit genug fortgeschritten, wird bei der anschließenden Extrusion der Querschnitt des Kernprofilstabs durch den Druck der thermoplastischen Schmelze verändert oder die Struktur des Kernprofils gar zerstört. Ein höherer Wärmeeintrag pro Zeiteinheit kann bei dem bekannten Verfahren auch nicht dadurch erreicht werden, dass das beheizte Pultrusionswerkzeug beliebig verlängert wird, da die Reibungskräfte in dem Werkzeug dann nicht mehr mit vertretbarem Aufwand handhabbar wären.

Die Druckschriften JP H09 76357 A, EP 1 063 081 A2 und DE 102 51 518 A1 offenbaren weitere Verfahren zur Herstellung von Federleistenprofilen für einen Lattenrost.

Die Aufgabe der vorliegenden Erfindung liegt somit darin, ein Inlineverfahren zur Herstellung einer Federprofilleiste zur Ausbildung eines Lattenrosts in der Art zu verbessern, dass insbesondere eine wesentlich höhere Durchlaufgeschwindigkeit im Inlineverfahren erreicht wird und darüber eine wirtschaftlichere Fertigungsweise bewirkt wird.

Diese Aufgabe wird durch ein Inlineverfahren mit den Merkmalen des Anspruchs 1 gelöst.

Erfindungswesentlich ist, dass die vollständige Aushärtung des duroplastischen Kernprofils gar nicht abgewartet zu werden braucht, bevor die Extrusion des Thermoplasts durchgeführt wird, sondern dass eine Nachhärtung des Kernstrangs auch nach dem Aufextrudieren der Mantelschicht erfolgt und zwar bis hin in die Lagerzeit der äußerlich bereits fertiggestellten und verpackten Profilstäbe. Hierzu wird die Reaktionswärme ausgenutzt, die entsteht, wenn ein geeignetes Reaktionsgemisch verwendet wird, das zu einer exothermen Vernetzungsreaktion bei der Polyesterbildung führt. Außerdem wirkt die bereits aufgebrachte thermoplastische Mantelschicht wärmeisolierend, sodass die durch die exotherme Reaktion im Reaktionsharz entstehende Wärme nicht an die Umgebung abgeführt wird, sondern zur schnelleren Durchhärtung von innen heraus beiträgt.

Neben der Verwendung als Federleistenprofil für ein Bettlattenrost ist eine Verwendung des so hergestellten Profils auch für die Unterpolsterung von Sitzmöbeln, möglich wie auch für ganz andere Anwendungsfälle, in denen eine hohe mechanische Belastbarkeit und eine geschlossene thermoplastische Außenhaut wünschenswert sind.

Um eine solche Nachhärtung nach Verlassen der Produktionsanlage zu ermöglichen, ist es jedoch zuvor notwendig, den Kernstrang bis zum Eintritt in die Extrusionsdüse so weit zu stabilisieren, dass die Aufextrusion der Mantelschicht ohne Querschnittsveränderung des Kernprofilstrangs möglich ist, auch wenn eben noch keine vollständige Durchhärtung darin eingetreten ist.

Um diese Teilhärtung in ausreichender Weise zu bewirken, aber zugleich die gegenüber dem Stand der Technik deutlich erhöhten Durchlaufgeschwindigkeiten zu erreichen, ist erfindungsgemäß vorgesehen, das Faserbündel, das zur Ausbildung des Kernstrangs vorbereitet wird, durch wenigstens eine spiralförmige Umwicklung mit seitlich zugeführten Zusatzfasern, Fäden oder Filamenten zu stabilisieren und die mit Harz benetzten, sich in Längsrichtung erstreckendenFasern während der Aushärtung sehr nah aneinander zu halten.

Vorzugsweise wird bei den umwickelten Faserbündeln ein spiralförmiger Bereich zwischen den Umwicklungen freigehalten. Die Wicklung drückt die Fasern zusammen, so dass sich im nicht umwickelten Bereich mehr Harz absetzt.

Es kann auch eine Wicklung von wenigstens zwei gegenläufig spiralförmigen Wicklungen vorgesehen sein.

Eine hohe Festigkeit des Kernstrangs besteht bereits dann, wenn nur in den Umwicklungen und den äußeren Faserlagen das Harz ausgehärtet ist.

Durch die Umwicklung wird beim Aushärten des Reaktionsharzes an der Außenseite des Faserbündels ein Faserverbundkunststoff mit einer Matrix aus den in Längsrichtung verlaufenden Fasern des Faser-Grundbündels und den nahezu quer dazu verlaufenden Fasern, insbesondere Polyamidfasern, aus der Umwicklung gebildet. Damit entsteht durch Zuführung von Wärme eine stabile Mantelstruktur an der Außenseite des Kernstrangs, auch wenn dieser zunächst nur in den außen liegenden Bereichen des Querschnitts ausgehärtet ist. Der teilgehärtete Kernstrang ist nach Erreichen des maximalen Temperaturpeaks stabil genug, um durch das Extrusionswerkzeug geführt zu werden und seine Querschnittsform beim Aufextrudieren der Mantelschicht nicht zu verändern. Dies ermöglicht es, wie bereits dargestellt, mit einem nur in Randbereichen teilgehärteten Kernstrang in die Extrusion zu gehen und die komplette Aushärtung des duroplastischen Querschnitts im Kernstrang auf die Lager- und Transportzeit des Federleistenprofils zu verschieben.

Mit dem erfindungsgemäßen Inlineverfahren können Durchlaufzeiten von 4 m/min und mehr erreicht werden, wohingegen Durchlaufzeiten bei herkömmlichen Pultrusionsverfahren im Bereich von 0,1 bis max. 1,5 m/min liegen.

Vorzugsweise ist eine Heizstrecke vorgesehen, die so lang ausgebildet ist, dass bei den gegebenen geometrischen Dimensionen des Querschnitts einer Durchlaufgeschwindigkeit von 3 m/min bis 9 m/min, welche vom Durchmesser abhängig ist, bereits eine nahezu vollständige Durchhärtung des Kernstrangs erreicht wird. Eine Erhöhung der Durchlaufgeschwindigkeit um 25 % und mehr ist erfindungsgemäß ohne weiteres möglich, weil bis zum Eintritt in die Extrusion die Stabilität des Außenbereichs des Kernstrangs ausreichend ist und die vollständige Durchhärtung durch die geschilderten Nachhärtungsprozesse bewirkt werden kann.

Es hat sich gezeigt, dass aufgrund der bereits beschriebenen Festigkeit der im Außenbereich kreuzweise verbundenen Fasern ein Vollquerschnitt des Kernstrangs nicht mehr in jedem Fall erforderlich ist. Vorzugsweise ist daher vorgesehen, das Faserbündel für die Längsfasern über einen Dorn zu leiten und dadurch einen rohrförmigen, in der Mitte hohlen Kernstrang auszubilden. Da somit die auszuhärtende Schichtdicke gegenüber einem Vollquerschnitt deutlich reduziert ist, kann die Reaktionszeit im Kernstrang abermals herabgesetzt werden.

Die Außenkontur des Kernstrangs kann kreisrund oder polygonal sein, sollte aber rotationssymmetrisch sein, sodass die von der Schmelze im Extruderkopf ausgehenden Druckkräfte relativ gleichmäßig auf die Außenkontur des Kernstrangs wirken.

Bei Verwendung eines Dorns und der Ausbildung eines rohrförmigen Kernstrangs ist es zudem vorteilhaft, wenn der Dorn von innen beheizt wird. Auch hierdurch kann die Durchhärtung des Kernstrangs von innen heraus beschleunigt werden, was wiederum dazu führt, die Durchlaufgeschwindigkeit hochsetzen zu können, da eben noch zeitliche Reserven durch die Nachhärtungsprozesse im Lager und beim Transport genutzt werden können.

Statt eines Dornes kann eine thermoplastische Seele eingesetzt werden, die durch ihr Mitlaufen keine Reibkräfte erzeugt. Diese Seele kann aus Kunststoffen sein, die bis 200° C temperaturbeständig sind. Auch eine Öffnung der Seele ist möglich, wozu ein Kunststoffrohr oder -schlauch eingesetzt wird. Sogar geschäumtes Material kann als Kern verwendet werden.

Vorzugsweise wird eine Mantelschicht durch Extrusion ausgebildet, die sowohl in Bezug auf eine horizontale wie auf eine vertikale Querschnittsachse symmetrisch ist. Hierdurch werden einseitige Materialanhäufungen im Querschnitt vermieden, sodass Verformungen des Federleistenprofils bei der späteren Abkühlung vermieden werden. Dies ist insbesondere im Hinblick auf die Option, eine Nachhärtung erst nach Verlassen der Extrusionslinie zu bewirken, vorteilhaft.

Die Erfindung wird nachfolgend mit Bezug auf die Zeichnung näher erläutert. Die Figuren zeigen im Einzelnen:
- Fig. 1: eine Produktionsvorrichtung zur Durchführung des Inlineverfahrens in einer schematischen Ansicht von oben;
- Fig. 2: einen Querschnitt durch ein Federleistenprofil;
- Fig. 3: einen Kernstrang vor der Ausbildung der Mantelschicht und
- Fig. 4: einen Längsschnitt durch das Federleistenprofil.

Das erfindungsgemäße Verfahren wird nachfolgend mit Bezug auf die in schematischer Blockansicht von oben dargestellte Produktionsanlage 100 erläutert, in welcher die Produktionsrichtung von links nach rechts verläuft.

Die schematisch dargestellte Produktionsanlage 100 ist im Ausführungsbeispiel als Duo-Produktionsanlage ausgebildet, d. h. zwei nahezu identische Produktionslinien laufen parallel nebeneinander, wobei in dem dargestellten Ausführungsbeispiel die meisten Komponenten, bis auf einen Extruder 109, für jede Linie separat, also insgesamt doppelt, vorhanden sind. Die gesamte Länge der Produktionslinie von Anfang bis Ende beträgt im dargestellten Beispiel 40 m.

An einem Spulengatter 101 werden mehrere Spulen so bereitgehalten, dass darauf aufgespulte Fasern oder Fäden oder Filamente aus mehreren Einzelfasern durch ein Fasergatter 102 hindurch abgezogen werden können. Die einzelnen Fasern, Fäden oder Filamente werden durch ein Imprägnierbad 103 gezogen, in dem ein flüssiges Reaktionsharz vorrätig gehalten ist. Hierbei handelt es sich um ein Polyesterharz, das eine Polyol-Komponente sowie einen Härterzusatz enthält und thermisch aktiviert werden muss. Soweit die Umgebungstemperatur der Produktionsanlage 100 nicht zu weit steigt, bleibt das Harz in dem Imprägnierbad 103 dauerhaft flüssig.

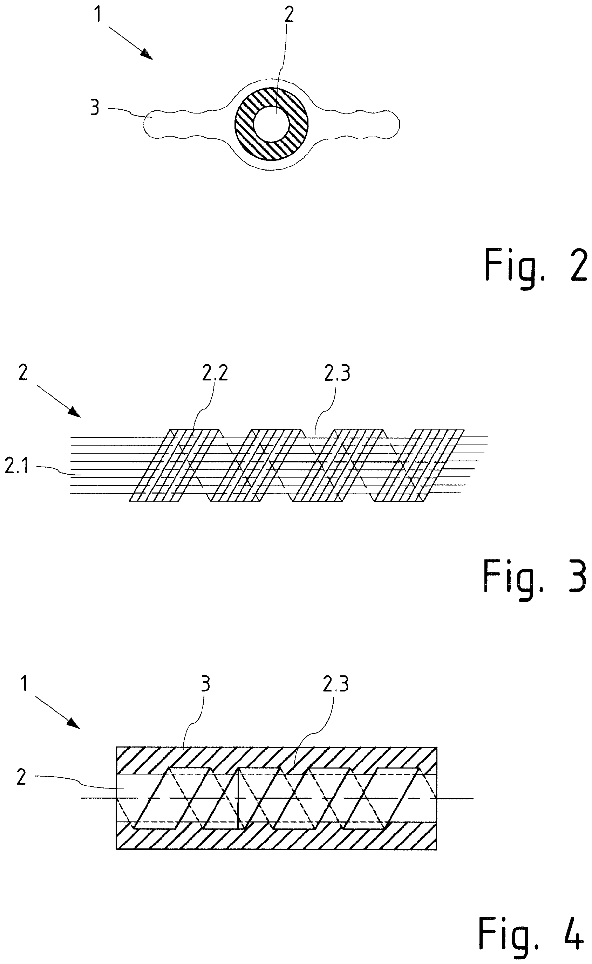

An einer Zwischenstation 104 werden die Fasern so geführt, dass sie gerichtet in eine Wickelmaschine 105 eingeführt werden können. An der Wickelmaschine 105 werden - wie Fig. 3 zeigt - die in Produktionsrichtung verlaufenden Längsfasern eines Faserbündels durch seitlich zugeführte Querfasern umwickelt.

Es wird eine spiralförmige Umwicklung 2.2 bewirkt, welche dazwischenliegende Bereiche 2.3 frei von der Umwicklung lässt. Der so vorbereitete, mit Reaktionsharz getränkte Faserstrang 2 wird in einer Heizstrecke 106 erwärmt, wobei direkt beim Einlauf in die Heizstrecke 106 eine niedrige Aufheiztemperatur vorgesehen ist, um die chemische Reaktion des Reaktionsharzes, welche zur Aushärtung führt, in Gang zu setzen. Ein sogenannter Preformer kann eingesetzt werden, um überschüssiges Harz abzustreichen, das dem Prozess wieder zugeführt wird. Im folgenden Verlauf der Heizstrecke 106 wird die Temperatur auf einem höheren Niveau gehalten, um die begonnene chemische Reaktion fortzuführen.

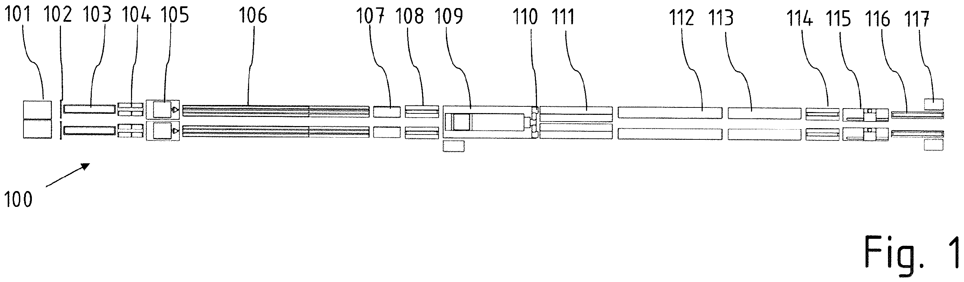

Wie bereits an der nur schematischen Zeichnung der Produktionsanlage in Fig. 1 erkennbar, ist die Heizstrecke 106 relativ lang im Verhältnis zu den übrigen Komponenten der Produktionsanlage 100 ausgebildet; mit etwa 11 m von 45 m Produktionslinie nimmt sie somit 20% der Strecke ein, so dass auch ein Fünftel der Durchlaufzeit auf die Heizstrecke 106 entfällt. Bei einer Abzugsgeschwindigkeit von 5 m/min stehen als etwa 100 Sekunden zur Verfügung, um die Polyesterreaktion in Gang zu setzen und soweit zu fördern, dass eine Aushärtung der randnahen Außenschicht bewirkt wird.

Der aushärtende Faserstrang 2 wird in der Heizstrecke 106 weitgehend berührungsfrei, allenfalls an einigen Stützrollen gestützt, durchgeführt, sodass im Gegensatz zur Pultrusion keine hohen Abzugskräfte erforderlich sind.

Der Abzug der einzelnen Fasern vom Fasergatter durch das Imprägnierbecken 103 und die Wickelmaschine 105 hindurch wird durch eine Abzugseinrichtung 108 bewirkt.

Um ein zu starkes Verkleben der Abzugseinrichtung 108 durch vorzeitig aushärtendes Reaktionsharz und/oder eine Erweichung von Kunststoffteilen in der Abzugseinrichtung 108 zu vermeiden, wird der Kernstrang 2 in einer Stabkühleinrichtung 107 kurzzeitig und vorwiegend oberflächlich abgekühlt. Da die im Inneren noch andauernde Aushärtungsreaktion exotherm ist und eine Aushärtung der randseitigen Bereiche des Kernprofilstrangs 2 einschließlich seiner Umwicklung bereits stattgefunden hat, geht die Aushärtung trotz der oberflächlichen Abkühlung im Inneren weiter.

Neben der Kühlung zur Verlangsamung der Reaktion im Oberflächenbereich ist auch der umgewandte Weg möglich, indem zur Unterstützung und Beschleunigung der Aushärtung Heißluft zugeführt wird. Anschließend läuft der Kernstrang 2 in eine Extrusionsdüse, die an einem Doppelwinkelkopf 110 eines für beide Linien gemeinsamen Extruders 109 montiert ist. In der in der Profilextrusion üblichen Weise durchläuft das Federleistenprofil anschließend ein Kalibrierbecken 111, um die Außenkontur der Mantelschicht 3 des Extruders nachzuformen und bei der Erstarrung zu stützen, und wird dann in einem Kühlbecken 112, 113 so weit gekühlt, dass die thermoplastische Schmelze in der Mantelschicht formstabil ist..

Der Abzug des ummantelten Federleistenprofils 1 erfolgt über eine zweite Abzugsvorrichtung 114, über welche das äußerlich fertige, wenngleich auch noch nicht in seinem Inneren ausgehärtete Federleistenprofil 1 einer Schneidanlage 115 zugeführt wird. Die Abzugsgeschwindigkeit an der zweiten Abzugsvorrichtung 114 ist mit der an der ersten Abzugsvorrichtung 108 synchronisiert.

In der Schneidanlage 115 wird das Federleistenprofil abgelängt, insbesondere durch eine mitlaufende Sägeeinrichtung, um einzelne Federleistenstäbe auszubilden, aus denen ein Lattenrost zur Auflage einer Matratze oder eines Polsters gebildet werden kann. Die Federleistenstäbe werden in einer Abpackvorrichtung 116 abgepackt, und zwar so, dass sie in Längsrichtung parallel an- und aufeinander liegen, dass jedoch keine Biegekräfte durch eine kreuzweise oder schräge Stapelung hervorgerufen werden.

Hierdurch kann die Kernschicht, soweit sie am Ende der Produktionsanlage 100 noch nicht vollständig ausgehärtet ist, während der anschließenden Lagerzeit weiter aushärten. Die einmal in Gang gesetzte Reaktion ist aufgrund der Art des verwendeten Polyester-Reaktionsharzes exotherm und kann daher ohne zusätzlichen Wärmeeintrag von außen so lange von selbst erfolgen, wie Reaktionspartner zur Ausbildung eines Polyesterkunststoffes im richtigen Verhältnis vorliegen.

Vorteilhafterweise werden die Federleistenstäbe an der Abpackvorrichtung 116 in einem Karton 117 oder einem sonstigen seitlich und unten geschlossenen Behältnis gestapelt. Die in den Stäben noch enthaltene Wärme wird dadurch konserviert und begünstigt die vollständige Durchhärtung des Kernstrangs im Lager.

Erhalten wird das in Fig. 2 im Querschnitt dargestellte Federleistenprofil 1 mit einem Kernstrang 2 und einer Mantelschicht 3. Der Kernstrang 2 ist bevorzugt als kreisrundes Rohr ausgebildet, sodass durch die reduzierte Wanddicke eine noch schnellere Aushärtung bis nach innen erfolgen kann. Durch eine Wandstärkenvariation am Kernstrang können unterschiedliche Eigenschaften bei einer Biegung eingestellt werden, so dass entsprechend "harte" und "weiche" Federleisten gebildet werden können. Beispielsweise beträgt der Außendurchmesser des Kernstrangs 10mm, und die Wandstärke beträgt 3 mm.

Die thermoplastische Mantelschicht, die beispielsweise aus Polypropylen besteht, umgibt den Kernstrang 2 oben und unten mit einer gleichmäßigen Wanddicke. Für die genannte Beispielgeometrie beträgt die Dicke der thermoplastischen Mantelschicht dort etwa 1,5 mm, wobei die Mantelschicht ausschließlich als Handhabungs- und Verschleißschutz dient, jedoch keinen wesentlichen Einfluss auf die mechanische Belastbarkeit besitzt, die nahezu ausschließlich durch Dimension und Querschnitt des Kernstrangs bestimmt wird.

Zu beiden Seiten springt das Mantelschichtprofil jeweils in einem Fortsatz nach außen vor. Durch die seitlichen Fortsätze wird oben und unten eine breite Auflagefläche geschaffen, an der sich beispielsweise ein Polster oder eine Matratze abstützen kann. Es besteht sowohl eine Spiegelsymmetrie des Profilquerschnitts in Bezug auf eine horizontale Achse wie auch in Bezug auf eine vertikale Achse. Dadurch wird während des Abkühlprozesses vermieden, dass sich das Profil einseitig verzieht, da zu beiden Seiten hin gleiche Volumina an thermoplastischer Schmelze eingebracht werden, die in den Kühl- und Kalibriereinrichtungen 111, 112, 113 allseitig den gleichen Abkühlbedingungen unterworfen werden.

Fig. 4 zeigt schließlich einen Längsschnitt durch das fertige Federleistenprofil 1. Erkennbar ist dort, dass es eine Verzahnung der außen liegenden Mantelschicht 3 mit dem Kernprofil 2 gibt. Die bei dem umwickelten Kernstrang 2 in Fig. 3 noch frei zwischen den jeweiligen Umwicklungssträngen liegenden Bereiche 2.3 sind mit dem thermoplastischen Kunststoff der Mantelschicht 3 ausgefüllt. Hierdurch erfolgt eine sichere Verbindung zwischen der thermoplastischen Mantelschicht und dem Kernstrang 2, die insbesondere verhindert, dass sich die beiden Komponenten 2, 3 beim Abkühlen aufgrund unterschiedlichen Schrumpfverhaltens voneinander trennen. Die extrudierte Mantelschicht 3 schrumpft sogar auf dem Stab fest. Die am Ende der Produktionsanlage 100 erhaltenen Profilstäbe bleiben daher auch nach dem Ablängen maßhaltig, obwohl der Aushärtungsprozess im Inneren des Kernstrangs 2 unter Umständen noch nicht abgeschlossen ist. Aufgrund der formschlüssigen Verklammerung der Mantelschicht 3 mit dem Kernstrang 2 wird eine nachträgliche Formänderung auch während des restlichen Aushärtungsprozesses im Lager oder beim Transport verhindert.

Hervorzuheben ist noch, dass bei dem erfindungsgemäßen Inlineverfahren der in Fig. 3 dargestellte, einfach umwickelte Faserstrang 2 schon im Rohzustand, ohne jede Imprägnierung, so fest ausgebildet ist, dass er ohne weitere Hilfsmittel handhabbar ist. Er ist stabil gegen Ausknicken. Kleine Differenzen in den Abzugsgeschwindigkeiten der Abzugseinheiten 108 und 114 können problemlos kompensiert werden. Aufgrund der Formstabilität kann der in der Aushärtung befindliche Kernstrang 2 zudem über eine sehr lange Heizstrecke 106 gezogen werden, sodass beim Einlauf in den Extruderkopf 110 zumindest die Randschichten des Kernstrangs 2 ausgehärtet sind und dem Schmelzedruck ohne Weiteres standhalten. Bedarfsweise kann eine zweite Umwicklung vorgesehen sein, die kreuzweise zur ersten Umwicklung verläuft.

## Patentansprüche

1. Inlineverfahren zur Herstellung eines Federleistenprofils (1) für einen Lattenrost, welches Federleistenprofil (1) wenigstens einen Kernstrang (2) aus einem faserverstärkten Kunststoff und wenigstens eine thermoplastische Mantelschicht (3) umfasst, die den Kernstrang (2) umhüllt,
mit wenigstens folgenden Schritten:
- Vereinigen mehrerer Fasern, Fäden und/oder Filamente zu einem Faserbündel (2.1);
- Tränken des Faserbündels (2.1) mit einem thermisch aktivierbaren Reaktionsharz,
- Formen der Außenkontur des mit dem Reaktionsharz getränkten Faserbündels (2.1);
- Thermische Aktivierung des Reaktionsharzes (2.1) zur Ausbildung eines aushärtenden Kernstrangs;
- Einführen des Kernstrangs (2) in einen Extruderkopf (110)
- Auftragen von thermoplastischer Schmelze in dem Extruderkopf (110) zur Ausbildung der Mantelschicht (3) an dem Federleistenprofil (1);
- Kühlung und Kalibrierung des Federleistenprofils (1) in einer Kühl- und Kalibriervorrichtung (111, 112, 113)
**dadurch gekennzeichnet,**
- **dass** in einer Wickelmaschine (105) die Außenkontur des Faserbündels (2.1) mit wenigstens einem seitlich zu dem Faserbündel zugeführten Faden oder Filament (2.2) in wenigstens einer Lage und Orientierung umwickelt wird;
- **dass** in einer Heizstrecke (106), vor dem Einführen des Kernstrangs (2) in den Extruderkopf (110), eine Teilaushärtung des Reaktionsharzes in der umwickelten Außenschicht des Faserbündels (2.1) bewirkt wird und
- **dass** der Kernstrang (2) nach dem Aufextrudieren der Mantelschicht (3) nachgehärtet wird.

2. Inlineverfahren nach Anspruch 1, **dadurch gekennzeichnet, dass** am Faserbündel (2.1) jeweils zwischen benachbarten umschlingenden Fäden oder Filamenten (2.2') ein freier Abstandsbereich (2.3) besteht und wobei die von der Umschlingung frei gehaltenen Abstandsbereiche (2.3) einen gegenüber den Umschlingungen leicht erhöhten Außenumfang besitzen.

3. Inlineverfahren nach Anspruch 1 oder 2, **dadurch gekennzeichnet, dass** die Außenkontur des Kernstrangs (2) kreisrund ist.

4. Inlineverfahren nach Anspruch 1 oder 2, **dadurch gekennzeichnet, dass** die Außenkontur des Kernstrangs polygonal ist.

5. Inlineverfahren nach einem der Ansprüche 1 bis 4, **dadurch gekennzeichnet, dass** das mit Reaktionsharz getränkte Faserbündel über einen Dorn geleitet wird und ein rohrförmiger Kernstrang (20) ausgebildet wird.

6. Inlineverfahren nach Anspruch 5, **dadurch gekennzeichnet, dass** der Dorn von innen beheizt wird.

7. Inlineverfahren nach einem der Ansprüche 1 bis 4, **dadurch gekennzeichnet, dass** im Inneren des Faserbündels eine thermoplastische Seele geführt wird.

8. Inlineverfahren nach einem der Ansprüche 1 bis 7, **dadurch gekennzeichnet, dass** die Durchlaufzeit des Kernstrangs (2) zwischen dem Beginn der thermischen Aktivierung und dem Ende der Kühlung und Kalibrierung kürzer ist als die zur Aushärtung über den gesamten Querschnitt des Kernstrangs (2) benötigte - Reaktionszeit.

9. Inlineverfahren nach Anspruch 8, **dadurch gekennzeichnet, dass** das Federleistenprofil (1) am Ende der Kühl- und Kalibriervorrichtung (111, 112, 113) zu einem Federleistenstab abgelängt und während einer Auslagerungszeit, die größer ist als die Durchlaufzeit, biegekraftfrei zur Nachhärtung ausgelagert wird.

10. Inlineverfahren nach einem der vorhergehenden Ansprüche, **dadurch gekennzeichnet, dass** an dem Faserbündel eine Kreuzwicklung ausgebildet wird.

11. Inlineverfahren nach einem der vorhergehenden Ansprüche, **dadurch gekennzeichnet, dass** das Federleistenprofil (1) nach Verlassen der Kühl- und Kalibriervorrichtung (111, 112, 113) abgelängt und die abgelängten Federleisten im Stapel aufeinander liegend gelagert werden.

## Claims

1. Inline method for producing a spring strip profile (1) for a slatted frame, which spring strip profile (1) comprises at least one core strand (2) formed by a fibre-reinforced plastic and at least one thermoplastic cover layer (3) surrounding the core strand (2), comprising at least the following steps:
- Joining several fibres, threads and/or filaments to form a fibre bundle (2.1);
- Impregnating the fibre bundle (2.1) with a thermally activatable reaction resin,
- Moulding the outer contour of the fibre bundle impregnated with the reaction resin (2.1);
- Thermally activating the reaction resin (2.1) to form a cured core strand;
- Introducing the core strand (2) into an extruder head (110)
- Applying thermoplastic melt in the extruder head (110) to form the cover layer (3) on the spring strip profile (1);
- Cooling and calibrating the spring strip profile (1) in a cooling and calibrating device (111, 112, 113)
**characterized in that**
- in a winding machine (105) the outer contour of the fibre bundle (2.1) is wrapped around by at least one thread or filament (2.2) supplied laterally in relation to the fibre bundle in at least one position and orientation;
- in a heating section (106), before the core strand (2) is introduced into the extruder head (110), a partial curing of the reaction resin in the wrapped outer layer of the fibre bundle (2.1) is effected and
- **in that** the core strand (2) is post-cured after extrusion of the cover layer (3).

2. Inline method according to claim 1, **characterized in that** on the fibre bundle (2.1) in each case between adjacent wrapped threads or filaments (2.2') there is a free spacing region (2.3) and wherein the free spacing regions (2.3) kept free from the wrapping have a slightly increased outer circumference compared to the wrappings.

3. Inline method according to claim 1 or 2, **characterized in that** the outer contour of the core strand (2) is circular.

4. Inline method according to claim 1 or 2, **characterized in that** the outer contour of the core strand is polygonal.

5. Inline method according to any one of claims 1 to 4, **characterized in that** the fibre bundle impregnated with reaction resin is passed over a mandrel and a tubular core strand (20) is formed.

6. Inline method according to claim 5, **characterized in that** the mandrel is heated from the inside.

7. Inline process according to any one of claims 1 to 4, **characterized in that** a thermoplastic central core is guided inside the fibre bundle.

8. Inline method according to one of claims 1 to 7, **characterized in that** the processing time of the core strand (2) between the start of thermal activation and the end of cooling and calibration is shorter than the reaction time required for curing over the entire cross-section of the core strand (2).

9. Inline method according to claim 8, **characterized in that** the spring strip profile (1) is cut to length at the end of the cooling and calibrating device (111, 112, 113) to form a spring strip bar and is aged for post-curing without any bending force during an ageing time which is longer than the processing time.

10. Inline method according to one of the preceding claims, **characterized in that** a cross winding is formed on the fibre bundle.

11. Inline method according to one of the preceding claims, **characterised in that** the spring strip profile (1) is cut to length after leaving the cooling and calibrating device (111, 112, 113) and the cut spring strips are stored in a stack lying on top of each other.

## Revendications

1. Procédure en ligne pour la fabrication d'un profilé de latte élastique (1) pour un sommier à lattes, lequel profilé de latte élastique (1) comprend au moins un fil d'âme (2) en matière plastique renforcée de fibres et au moins une couche d'enveloppe thermoplastique (3) qui enveloppe le fil d'âme (2), comprenant au moins les étapes suivantes :
- Combinaison de plusieurs fibres, fils et/ou filaments en un faisceau de fibres (2.1) ;
- Trempez le faisceau de fibres (2.1) avec une résine de réaction activable thermiquement,
- Former le contour extérieur du faisceau de fibres (2.1) imprégné de la résine de réaction;
- Activation thermique de la résine de réaction (2.1) pour former un fil d'âme durcissant ;
- Insertion du fil d'âme (2) dans une tête d'extrusion (110)
- Application d'une matière thermoplastique fondue dans la tête d'extrusion (110) pour former la couche d'enveloppe (3) sur le profilé de latte élastique (1)
- Refroidissement et calibrage du profilé de latte élastique (1) dans un dispositif de refroidissement et de calibrage (111, 112, 113)
**caractérisé en ce que,**
- dans une machine à bobiner (105), le contour extérieur du faisceau de fibres (2.1) est enveloppé d'au moins un fil ou filament (2.2) fourni latéralement au faisceau de fibres dans au moins une position et une orientation ;
- dans une section de chauffage (106), avant que le fil d'âme (2) ne soit introduit dans la tête d'extrusion (110), un durcissement partiel de la résine réactive est effectué dans la couche extérieure enveloppée du faisceau de fibres (2.1), et
- le fil d'âme (2) est post-cuisson après l'extrusion de la couche d'enveloppe (3).

2. Procédure en ligne selon la revendication 1, **caractérisé en ce qu'**une zone d'espacement libre (2.3) existe à chaque fois entre des fils ou filaments (2.2') enroulés voisins sur le faisceau de fibres (2.1) et dans lequel les zones d'espacement (2.3) maintenues libres de l'enroulement ont une circonférence extérieure légèrement augmentée par rapport aux enroulements.

3. Procédure en ligne selon la revendication 1 ou 2, **caractérisée en ce que** le contour extérieur du fil d'âme (2) est circulaire.

4. Procédure en ligne selon la revendication 1 ou 2, **caractérisée en ce que** le contour extérieur du fil d'âme est polygonal.

5. Procédure en ligne selon l'une quelconque des revendications 1 à 4, **caractérisé en ce que** le faisceau de fibres imprégné de résine de réaction est passé sur un mandrin et un fil d'âme tubulaire (20) est formé.

6. Procédure en ligne selon la revendication 5, **caractérisée en ce que** le mandrin est chauffé de l'intérieur.

7. Procédure en ligne selon l'une quelconque des revendications 1 à 4, **caractérisé en ce qu'**un noyau thermoplastique est guidé à l'intérieur du faisceau de fibres.

8. Procédure en ligne selon l'une quelconque des revendications 1 à 7, **caractérisée en ce que** le temps de traitement du fil d'âme (2) entre le début de l'activation thermique et la fin du refroidissement et de l'étalonnage est plus court que le temps de réaction nécessaire au durcissement sur toute la section transversale du fil d'âme (2).

9. Procédure en ligne selon la revendication 8, **caractérisé en ce que** le profilé de latte élastique (1) est coupé à longueur à l'extrémité du dispositif de refroidissement et de calibrage (111, 112, 113) pour former une barre de latte élastique et est externalisé pour le post-durcissement sans force de flexion pendant un temps de vieillissement qui est plus long que le temps de passage.

10. Procédure en ligne selon l'une des revendications précédentes, **caractérisé en ce qu'**un enroulement croisé est formé sur le faisceau de fibres.

11. Procédure en ligne selon l'une des revendications précédentes, **caractérisée en ce que** le profilé de latte élastique (1) est coupé à longueur après avoir quitté le dispositif de refroidissement et de calibrage (111, 112, 113) et les lattes élastiques coupées à longueur sont stockées dans un empilement superposé.
